# EUROPEAN PATENT SPECIFICATION

(11) **EP 4 402 974 B1**
(45) Date of publication and mention of the grant of the patent: **18.11.2026**
(21) Application number: 21956443.2
(22) Date of filing: 13.09.2021
(51) Int. Cl.: H04W 74/00, H04W 16/14, H04W 74/0808, H04W 72/23

(54) **RADIO RESOURCE CONTROL AND DOWNLINK CONTROL INFORMATION SIGNALING FOR LISTEN-BEFORE-TALK TYPE**
FUNKRESSOURCENSTEUERUNG UND DOWNLINK-STEUERINFORMATIONSSIGNALISIERUNG FÜR LISTEN-BEFORE-TALK-TYP
COMMANDE DE RESSOURCES RADIO ET SIGNALISATION D'INFORMATIONS DE COMMANDE DE LIAISON DESCENDANTE POUR TYPE "ÉCOUTER AVANT DE PARLER"

(43) Date of publication of application: 24.07.2024
(73) Proprietor: QUALCOMM Incorporated, San Diego, California 92121-1714 (US)
(72) Inventor: CHISCI, Giovanni, San Diego, California 92121-1714 (US); SUN, Jing, San Diego, California 92121-1714 (US); CHANDE, Vinay, San Diego, California 92121-1714 (US); CHENDAMARAI KANNAN, Arumugam, San Diego, California 92121-1714 (US); CHEN, Siyi, San Diego, California 92121-1714 (US); ZHANG, Xiaoxia, San Diego, California 92121-1714 (US)
(74) Representative: Tomkins & Co
(86) International application number: PCT/CN2021/117974
(87) International publication number: WO 2023/035264

(56) References cited:
- WO-A1-2021/098860
- CN-A- 112 703 810
- CN-A- 113 170 316
- US-A1- 2021 144 760
- NOKIA NOKIA SHANGHAI BELL: "Feature Lead's Summary #2 on Channel Access Procedures", vol. RAN WG1, no. Chongqing, P.R. China; 20191014 - 20191020, 22 October 2019 (2019-10-22), XP051798948, Retrieved from the Internet <URL:https://ftp.3gpp.org/tsg_ran/WG1_RL1/TSGR1_98b/Docs/R1-1911706.zip R1-1911706_NR-U channel access FL summary 2.docx> [retrieved on 20191022]
- ERICSSON: "Channel access procedures", vol. RAN WG1, no. Chongqing, China; 20191014 - 20191020, 8 October 2019 (2019-10-08), XP051789727, Retrieved from the Internet <URL:http://www.3gpp.org/ftp/tsg_ran/WG1_RL1/TSGR1_98b/Docs/R1-1910947.zip> [retrieved on 20191008]
- CHARTER COMMUNICATIONS: "Remaining Aspects of Channel Access", vol. RAN WG1, no. Reno, NV; 20190513 - 20190517, 13 May 2019 (2019-05-13), XP051728568, Retrieved from the Internet <URL:http://www.3gpp.org/ftp/Meetings%5F3GPP%5FSYNC/RAN1/Docs/R1%2D1907122%2Ezip> [retrieved on 20190513]
- HUAWEI ET AL: "Coexistence and channel access for NR unlicensed band operations", vol. RAN WG1, no. Reno, USA; 20191118 - 20191122, 9 November 2019 (2019-11-09), XP051823048, Retrieved from the Internet <URL:https://ftp.3gpp.org/tsg_ran/WG1_RL1/TSGR1_99/Docs/R1-1911866.zip R1-1911866.docx> [retrieved on 20191109]
- HUAWEI ET AL: "Transmission with configured grant in NR unlicensed band", vol. RAN WG1, no. Chongqing, China; 20191014 - 20191020, 8 October 2019 (2019-10-08), XP051809062, Retrieved from the Internet <URL:https://ftp.3gpp.org/tsg_ran/WG1_RL1/TSGR1_98b/Docs/R1-1910048.zip R1-1910048.docx> [retrieved on 20191008]
- ERICSSON: "Signaling options of LBT category for Msg3", 3GPP DRAFT; R2-1910785 SIGNALING OPTIONS OF LBT CATEGORY AND COT SHARING INDICATOR FOR MSG3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20190826 - 20190830, 15 August 2019 (2019-08-15), Mobile Competence Centre ; 650, route des Lucioles ; F-06921 Sophia-Antipolis Cedex ; France , XP051768553
- BROADCOM: "Discussion on short fixed duration LBT for transmissions outside a COT", 3GPP DRAFT; R1-1903370-SHORT_FIXED_DURATION_LBT_OUTSIDE_COT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20190225 - 20190301, 27 February 2019 (2019-02-27), Mobile Competence Centre ; 650, route des Lucioles ; F-06921 Sophia-Antipolis Cedex ; France , pages 1 - 6, XP051601046

## Description

### FIELD OF THE DISCLOSURE

Aspects of the present disclosure generally relate to wireless communication and to techniques and apparatuses for signaling listen-before-talk type using radio resource control and downlink control information.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

WO 2021/098860 A1 discloses a wireless communication method by a user equipment (UE), comprising: determining, by the UE based on a signaling from a base station, a combination of a listen before talk (LBT) type, a cyclic prefix (CP) extension, and a channel access priority class (CAPC) for an uplink transmission to the base station.

3GPP, R1-1911706, "Feature Lead's Summary #2 on Channel Access Procedures", Nokia et al discusses aspects related to channel access procedures, including LBT mechanisms, LBT options for different DL and UL channels, receiver assisted LBT, directional LBT, etc.

3GPP, R1-1910947, "Channel access procedures", Ericsson discusses channel access related aspects.

3GPP, R1-1907122, "Remaining Aspects of Channel Access", Charter Communications discusses open issues in channel access.

3GPP, R1-1911866, "Coexistence and channel access for NR unlicensed band operations", Huawei et al discusses potential enhancements on LBT mechanism.

### SUMMARY

The invention is defined in the independent claims, to which reference should now be made. Advantageous embodiments are set out in the dependent claims.

Any embodiment, aspect, example or implementation not being part of the claims, is only presented as information.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Figs. 3, 4, 5, and 6 are diagrams illustrating examples associated with signaling listen-before-talk (LBT) type using radio resource control (RRC) and downlink control information (DCI), in accordance with the present disclosure.
Figs. 7 and 8 are diagrams illustrating example processes associated with signaling LBT type using RRC and DCI, in accordance with the present disclosure.
Figs. 9 and 10 are diagrams of example apparatuses for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

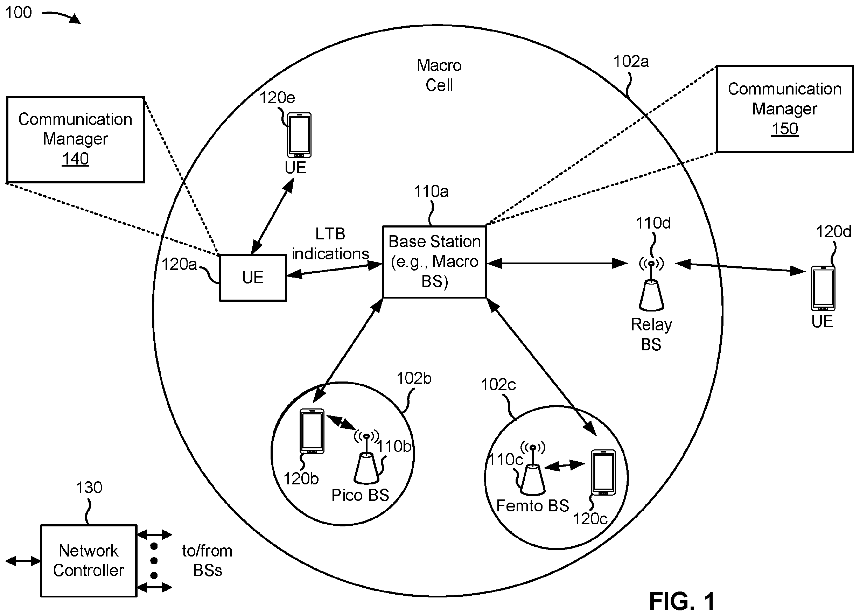

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart j ewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FRS) may be modified, and techniques described herein are applicable to those modified frequency ranges.

In some aspects, the UE 120 may include a communication manager 140. As shown in Fig. 1 and described in more detail elsewhere herein, the communication manager 140 may receive (e.g., from the base station 110) an indication associated with performing listen-before-talk (LBT) relative to a channel occupancy time (COT), and transmit (e.g., to the base station 110) an uplink communication, where the uplink communication is transmitted using an LBT procedure based at least in part on the indication. Additionally, or alternatively, the communication manager 140 may perform one or more other operations described herein.

In some aspects, the base station 110 may include a communication manager 150. As shown in Fig. 1 and described in more detail elsewhere herein, the communication manager 150 may transmit (e.g., to the UE 120) an indication associated with performing LBT relative to a COT, and receive (e.g., from the UE 120) an uplink communication, where the uplink communication was transmitted using an LBT procedure based at least in part on the indication. Additionally, or alternatively, the communication manager 150 may perform one or more other operations described herein.

As indicated above, Fig. 1 is provided as an example. Other examples may differ from what is described with regard to Fig. 1.

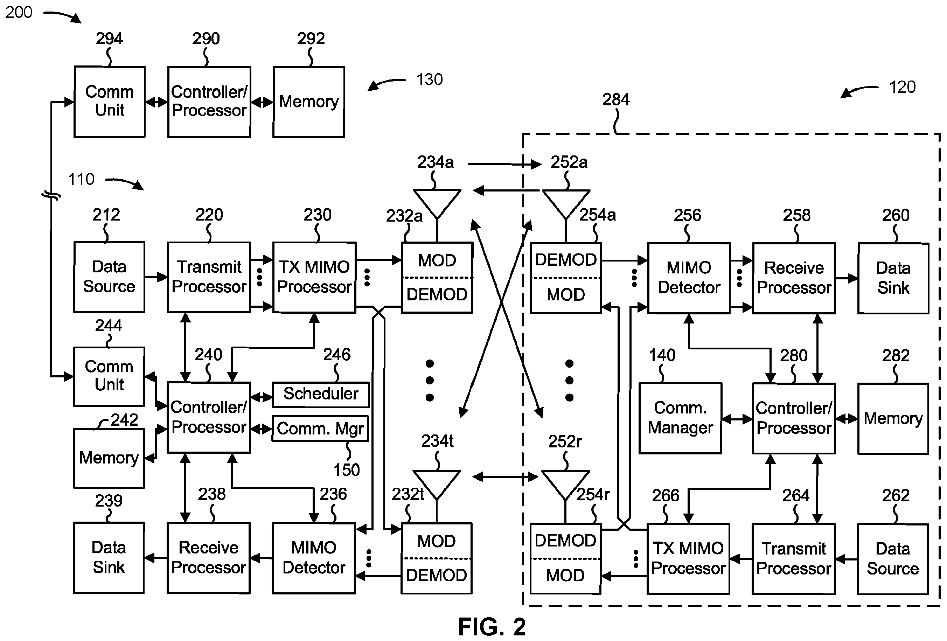

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as R antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., *T* output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., R received signals) to a set of modems 254 (e.g., R modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

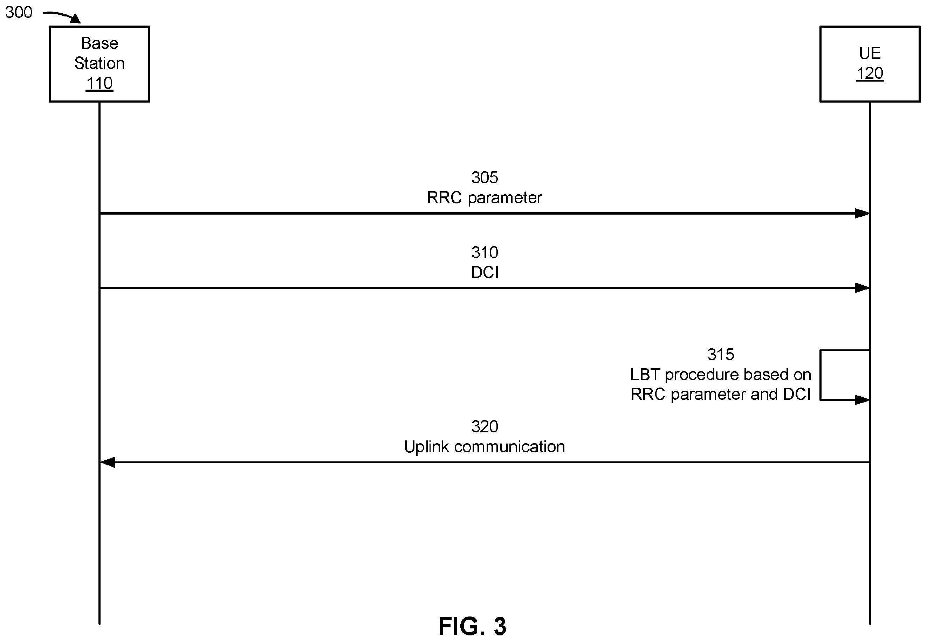

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 3-10).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 3-10).

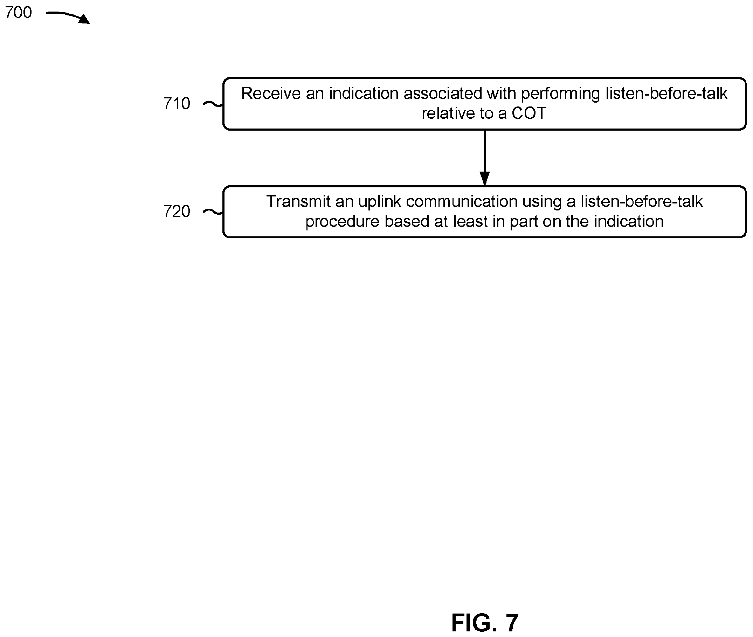

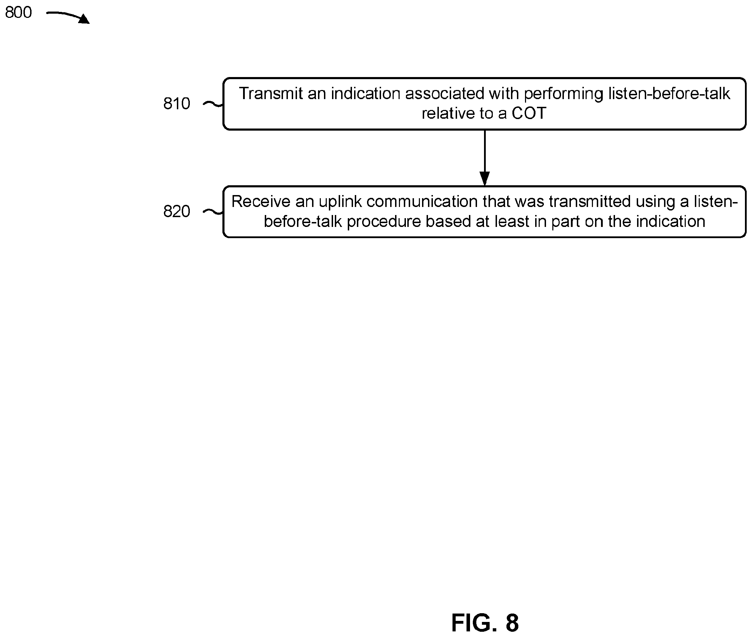

The controller/processor 240 of the base station 110, the controller/processor 280 of the UE 120, and/or any other component(s) of Fig. 2 may perform one or more techniques associated with signaling LBT type using RRC and DCI, as described in more detail elsewhere herein. For example, the controller/processor 240 of the base station 110, the controller/processor 280 of the UE 120, and/or any other component(s) of Fig. 2 may perform or direct operations of, for example, process 700 of Fig. 7, process 800 of Fig. 8, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 700 of Fig. 7, process 800 of Fig. 8, and/or other processes as described herein. In some examples, executing instructions may include running the instructions, converting the instructions, compiling the instructions, and/or interpreting the instructions, among other examples.

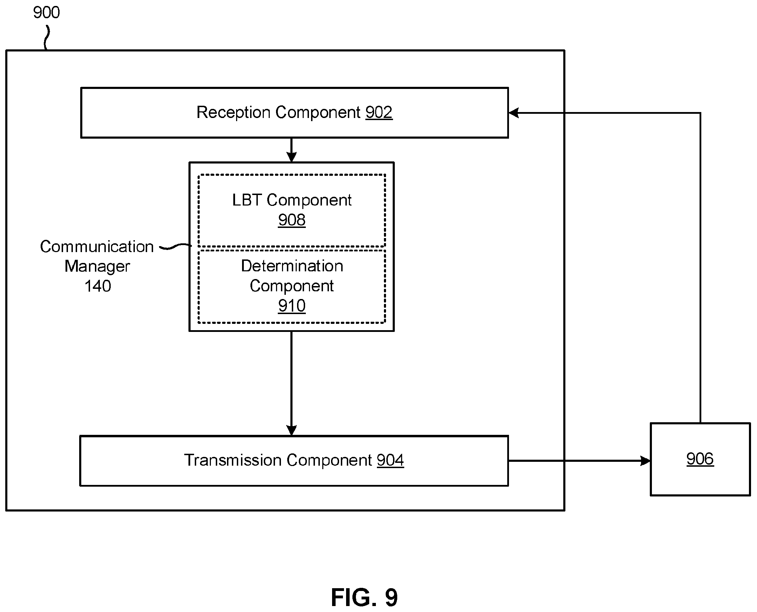

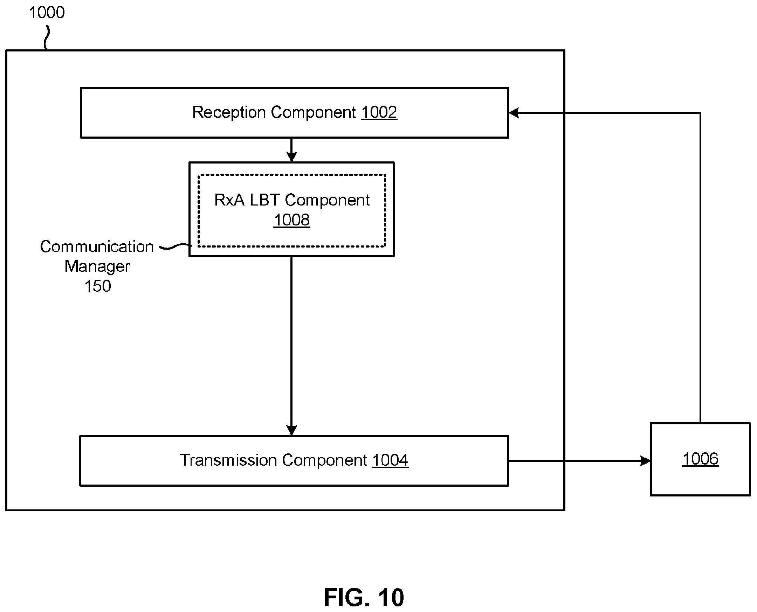

In some aspects, a UE (e.g., the UE 120 and/or apparatus 900 of Fig. 9) may include means for receiving, from a base station (e.g., the base station 110 and/or apparatus 1000 of Fig. 10), an indication associated with performing LBT relative to a COT; and/or means for transmitting, to the base station, an uplink communication, wherein the uplink communication is transmitted using an LBT procedure based at least in part on the indication. The means for the UE to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, a base station (e.g., the base station 110 and/or apparatus 1000 of Fig. 10) may include means for transmitting, to a UE (e.g., the UE 120 and/or apparatus 900 of Fig. 9), an indication associated with performing LBT relative to a COT; and/or means for receiving, from the UE, an uplink communication, wherein the uplink communication was transmitted using an LBT procedure based at least in part on the indication. The means for the base station to perform operations described herein may include, for example, one or more of communication manager 150, transmit processor 220, TX MIMO processor 230, modem 232, antenna 234, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

In some cases, a UE may be configured to use LBT in communicating with a network (e.g., via a base station). For example, the UE may wait for one or more symbols of a slot (e.g., a portion of a radio frame), and transmit (e.g., to the base station) within that slot only when the UE does not decode a transmission in those one or more symbols. The UE may wait for a preconfigured amount of time or for a dynamic amount of time (e.g., determined based on a minimum amount of time, a maximum amount of time, an energy level associated with the transmission, a power class of the UE, an antenna gain associated with the base station, and/or another variable). Accordingly, an LBT procedure may include a carrier sensing multiple access (CSMA) procedure, a clear channel assessment (CCA) procedure, a carrier sensing adaptive transmission (CSAT) procedure, and/or another similar procedure. For example, the UE may use an LBT procedure as set forth in the Institute of Electrical and Electronics Engineers (IEEE) LAN/MAN Standards Committee 802.11 standards, the IEEE Wireless Coexistence Technical Advisory Group (TAG) 802.19 standards, the European Telecommunications Standards Institute (ETSI) Harmonised European Standard (EN) 300 328, and/or another standard. A successful LBT procedure results in a length of time referred to as "channel occupancy time" or "COT" in which the device that performed the successful LBT procedure may use a channel on which the LBT procedure was performed.

3GPP has specified multiple LBT types, for example, for use in NR. Category 1 (Catl) LBT allows for immediate transmission without a CCA procedure or other LBT procedure. Category 2 (Cat2) LBT uses a fixed window (e.g., 25 µs) in which a CCA procedure or other LBT procedure is performed before transmission. Category 3 (Cat3) LBT uses a dynamic window (e.g., based on a random number generated by the UE) in which a CCA procedure or other LBT procedure is performed before transmission. However, the UE wastes power and processing resources when the UE performs CCA after the base station has obtained a COT for a channel that the UE will use to transmit to the base station.

Some techniques and apparatuses described herein enable a base station (e.g., base station 110) to indicate (e.g., via RRC signaling) to a UE (e.g., UE 120) whether to upgrade an LBT procedure (e.g., from a Cat3 LBT procedure to a Cat2 or a Cat1 LBT procedure or from a Cat2 LBT procedure to a Cat1 LBT procedure) when the base station 110 indicates a COT (e.g., via a COT system information (COT-SI) message). As a result, the UE 120 conserves power and processing resources when the UE 120 upgrades the LBT procedure.

Fig. 3 is a diagram illustrating an example 300 associated with signaling LBT type using RRC and DCI, in accordance with the claimed embodiment. As shown in Fig. 3, a base station 110 and a UE 120 may communicate with one another (e.g., on a wireless network, such as wireless network 100 of Fig. 1). The base station 110 may transmit data and other signals to the UE 120 on a downlink, and the UE 120 may transmit data and other signals to the base station 110 on an uplink.

The base station 110 transmits, and the UE 120 receives, an indication associated with performing LBT relative to a COT. For example, as shown by reference number 305, the indication includes an RRC parameter (e.g., as defined in 3GPP specifications and/or another standard).

In some aspects, the absence of the RRC parameter may indicate that the UE 120 should not upgrade LBT procedures, while the presence of the RRC parameter indicates that the UE 120 should upgrade LBT procedures. Accordingly, a first codepoint of the RRC parameter may indicate that the UE 120 may upgrade to Cat1 LBT. For example, the UE 120 may use a Cat1 LBT for an uplink communication (e.g., as described in connection with reference number 320) based on the RRC parameter and receiving an indication of a COT (e.g., a COT-SI) from the base station 110. Additionally, a second codepoint of the RRC parameter indicates that the UE 120 may upgrade to Cat2 LBT. For example, the UE 120 may use a Cat2 LBT for an uplink communication (e.g., as described in connection with reference number 320) based on the RRC parameter and receiving an indication of a COT (e.g., a COT-SI) from the base station 110.

As an alternative, a first codepoint of the RRC parameter may indicate that the UE 120 may indicate that the UE 120 should not upgrade LBT procedures, while at least a second codepoint of the RRC parameter indicates that the UE 120 should upgrade LBT procedures. The RRC parameter may include additional codepoints to distinguish different types of LBT upgrades, as described above.

Furthermore, as shown by reference number 310, the base station 110 may transmit, and the UE 120 may receive, DCI that indicates an LBT type. For example, the DCI may include a *ChannelAccess-CPext* and/or a *ChannelAccess-CPext-CAPC* parameter (e.g., as defined in 3GPP specifications and/or another standard). Although the description herein focuses on the *ChannelAccess-CPext* and *ChannelAccess-CPext-CAPC* parameters, the description similarly applies to other parameters that indicate an LBT type.

In some aspects, the absence of the DCI parameter may indicate that the UE 120 should perform a Cat1 LBT procedure, while the presence of the DCI parameter indicates that the UE 120 should perform a Cat2 LBT procedure or a Cat3 LBT procedure. For example, the base station 110 may omit the DCI parameter after the base station 110 obtains a COT such that the absence of the DCI parameter indicates the COT to the UE 120. Additionally, a first codepoint of the DCI parameter may indicate that the UE 120 should perform a Cat3 LBT procedure, and a second codepoint of the DCI parameter may indicate that the UE 120 should perform a Cat2 LBT procedure. Depending on the RRC parameter, the UE 120 may perform the LBT procedure, indicated by the DCI parameter, for an uplink communication (e.g., as described in connection with reference number 320) unless the UE 120 receives an indication of a COT (e.g., a COT-SI) from the base station 110 and upgrades the LBT procedure according to the RRC parameter. Additionally, or alternatively, a first codepoint of the DCI parameter may indicate that the base station 110 is requesting receiver-assisted (RxA) LBT, and a second codepoint of the DCI parameter may indicate that the base station 110 is not requesting RxA LBT. For example, the UE 120 may use a Cat2 LBT for an uplink communication (e.g., as described in connection with reference number 320), even when upgrading to Catl LBT is possible based on the RRC parameter, when the base station 110 indicates that the base station 110 is requesting RxA LBT.

As shown by reference number 315, the UE 120 may perform an LBT procedure based at least in part on the indication described in connection with reference number 305 (e.g., the RRC parameter). Additionally, the LBT procedure may be based at least in part on the DCI described in connection with reference number 310 (e.g., the DCI parameter). For example, the LBT procedure may be a Cat3 LBT procedure, a Cat2 LBT procedure, or a Cat1 LBT procedure. In one example, the UE 120 may select the LBT procedure according to example Table 1 or example Table 2 below:

**Table 1**

| **RRC parameter** | **DCI parameter** | **LBT procedure** |
|---|---|---|
| Absent | Absent | Catl (e.g., base station 110 has COT) |
| Absent | Present (e.g., any codepoint) | Cat3 (e.g., no COT indicated) |
| Present | Absent | Cat1 (e.g., base station 110 has COT) |
| Present | First codepoint | Cat2 (e.g., base station 110 has COT or is requesting RxA LBT) |
| Present | Second codepoint | Cat3 (e.g., no COT indicated) |

**Table 2**

| **RRC parameter** | **DCI parameter** | **LBT procedure** |
|---|---|---|
| First codepoint | First codepoint | Catl (e.g., base station 110 has COT) |
| First codepoint | Second codepoint | Cat3 (e.g., no COT indicated) |
| Second codepoint | First codepoint | Catl (e.g., base station 110 has COT) |
| Second codepoint | Third codepoint | Cat2 (e.g., base station 110 has COT or is requesting RxA LBT) |
| Second codepoint | Second codepoint | Cat3 (e.g., no COT indicated) |

Accordingly, as shown by reference number 320, the UE 120 may transmit, and the base station 110 may receive, an uplink communication (e.g., control information, such as uplink control information (UCI) on a physical uplink control channel (PUCCH), data on a physical uplink shared channel (PUSCH), and/or another type of uplink signal). In some aspects, the uplink communication is associated with a configured grant (CG) from the base station 110, such as a CG-PUSCH transmission, a sounding reference signal (SRS) that is periodic (P-SRS) or semi-periodic (SP-SRS), and/or a PUCCH transmission that is periodic (P-PUCCH) or semi-periodic (SP-PUCCH). As an alternative, the uplink communication is associated with a dynamic grant (DG) from the base station 110.

By using techniques as described in connection with Fig. 3, the base station 110 indicates (e.g., via RRC signaling) to the UE 120 whether to upgrade an LBT procedure (e.g., from a Cat3 LBT procedure to a Cat2 or a Cat1 LBT procedure or from a Cat2 LBT procedure to a Cat1 LBT procedure) when the base station 110 indicates a COT (e.g., via a COT-SI). As a result, the UE 120 conserves power and processing resources when the UE 120 upgrades the LBT procedure.

As indicated above, Fig. 3 is provided as an example. Other examples may differ from what is described with respect to Fig. 3.

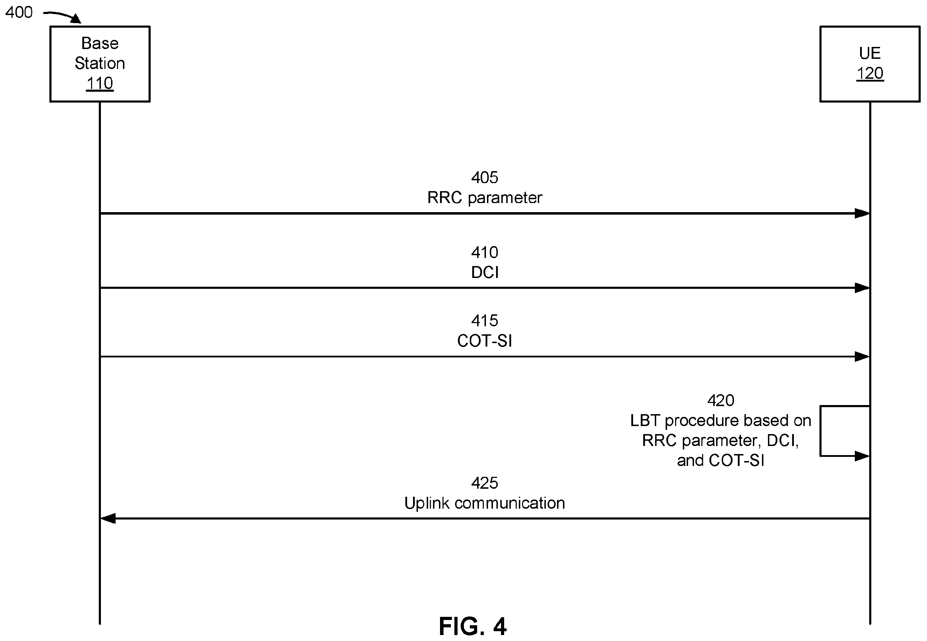

Fig. 4 is a diagram illustrating an example 400 associated with signaling LBT type using RRC and DCI, in accordance with the present disclosure. As shown in Fig. 4, a base station 110 and a UE 120 may communicate with one another (e.g., on a wireless network, such as wireless network 100 of Fig. 1). The base station 110 may transmit data and other signals to the UE 120 on a downlink, and the UE 120 may transmit data and other signals to the base station 110 on an uplink.

The base station 110 may transmit, and the UE 120 may receive, an indication associated with performing LBT relative to a COT. For example, as shown by reference number 405, the indication may include an RRC parameter (e.g., as defined in 3GPP specifications and/or another standard). The RRC parameter may be as described in connection with Fig. 3.

Furthermore, as shown by reference number 410, the base station 110 may transmit, and the UE 120 may receive, DCI that indicates an LBT type. For example, the DCI may include a *ChannelAccess-CPext* and/or a *ChannelAccess-CPext-CAPC* parameter (e.g., as defined in 3GPP specifications and/or another standard). The DCI parameter may be as described in connection with Fig. 3.

The base station 110 may further transmit, and the UE 120 may receive, an indication of a COT. For example, the base station 110 may have performed a CCA procedure and/or another LBT procedure to obtain the COT on a channel that the UE 120 will use to transmit to the base station 110. As shown by reference number 415, the indication may include a COT-SI message.

As shown by reference number 420, the UE 120 may perform an LBT procedure based at least in part on the indication described in connection with reference number 405 (e.g., the RRC parameter). Additionally, the LBT procedure may be based at least in part on the DCI described in connection with reference number 410 (e.g., the DCI parameter) and the indication described in connection with reference number 415 (e.g., the COT-SI). For example, the LBT procedure may be a Cat3 LBT procedure, a Cat2 LBT procedure, or a Cat1 LBT procedure. In one example, the UE 120 may select the LBT procedure according to example Table 3 or example Table 4 below:

**Table 3**

| RRC **parameter** | DCI **parameter** | COT-SI received? | LBT **procedure** |
|---|---|---|---|
| Absent | Absent | N/A | Catl (e.g., base station 110 has COT) |
| Absent | Present (e.g., any codepoint) | No | Cat3 (e.g., no COT indicated) |
| Absent | Present (e.g., any codepoint) | Yes | Catl (e.g., base station 110 has COT) |
| Present | Absent | N/A | Catl (e.g., base station 110 has COT) |
| Present | First codepoint | No | Cat2 (e.g., no COT indicated or base station 110 is requesting RxA LBT) |
| Present | First codepoint | Yes | Catl (e.g., base station 110 has COT) |
| Present | Second codepoint | No | Cat3 (e.g., no COT indicated) |
| Present | Second codepoint | Yes | Catl (e.g., base station 110 has COT) |

**Table 4**

| **RRC parameter** | **DCI parameter** | **COT-SI received?** | **LBT procedure** |
|---|---|---|---|
| First codepoint | First codepoint | N/A | Catl (e.g., base station 110 has COT) |
| First codepoint | Second codepoint | No | Cat3 (e.g., no COT indicated) |
| First codepoint | Second codepoint | Yes | Catl (e.g., base station 110 has COT) |
| Second codepoint | First codepoint | N/A | Catl (e.g., base station 110 has COT) |
| Second codepoint | Third codepoint | No | Cat2 (e.g., no COT indicated or base station 110 is requesting RxA LBT) |
| Second codepoint | Third codepoint | Yes | Catl (e.g., base station 110 has COT) |
| Second codepoint | Second codepoint | No | Cat3 (e.g., no COT indicated) |
| Second codepoint | Second codepoint | Yes | Catl (e.g., base station 110 has COT) |

In some aspects, the UE 120 may additionally determine a gap between an end of a downlink period (e.g., a downlink period in which the RRC parameter, the DCI parameter, and/or the COT-SI is received) and a beginning of an uplink period (e.g., in which the UE 120 will transmit the uplink communication as described in connection with reference number 425. Accordingly, the UE 120 may upgrade to a Catl LBT procedure based at least in part on the gap (e.g., when the gap satisfies a threshold). When the gap does not satisfy the threshold, the UE 120 may upgrade to a Cat2 LBT procedure instead of a Catl LBT procedure even when the COT-SI is received. In some aspects, the UE 120 may determine the gap based at least in part on the RRC parameter. For example, the UE 120 may determine the gap when the RRC parameter is "Present" as shown in example Table 3, or the RRC parameter is set to "Second codepoint" as shown in example Table 4.

Accordingly, as shown by reference number 425, the UE 120 may transmit, and the base station 110 may receive, an uplink communication (e.g., control information, such as UCI on a PUCCH, data on a PUSCH, and/or another type of uplink signal). In some aspects, the uplink communication is associated with a CG from the base station 110, such as a CG-PUSCH transmission, a P-SRS or an SP-SRS, and/or a P-PUCCH or an SP-PUCCH. As an alternative, the uplink communication is associated with a DG from the base station 110.

By using techniques as described in connection with Fig. 4, the base station 110 indicates (e.g., via RRC signaling) to the UE 120 whether to upgrade an LBT procedure (e.g., from a Cat3 LBT procedure to a Cat2 or a Cat1 LBT procedure, or from a Cat2 LBT procedure to a Cat1 LBT procedure) when the base station 110 indicates a COT (e.g., via a COT-SI). As a result, the UE 120 conserves power and processing resources when the UE 120 upgrades the LBT procedure.

As indicated above, Fig. 4 is provided as an example. Other examples may differ from what is described with respect to Fig. 4.

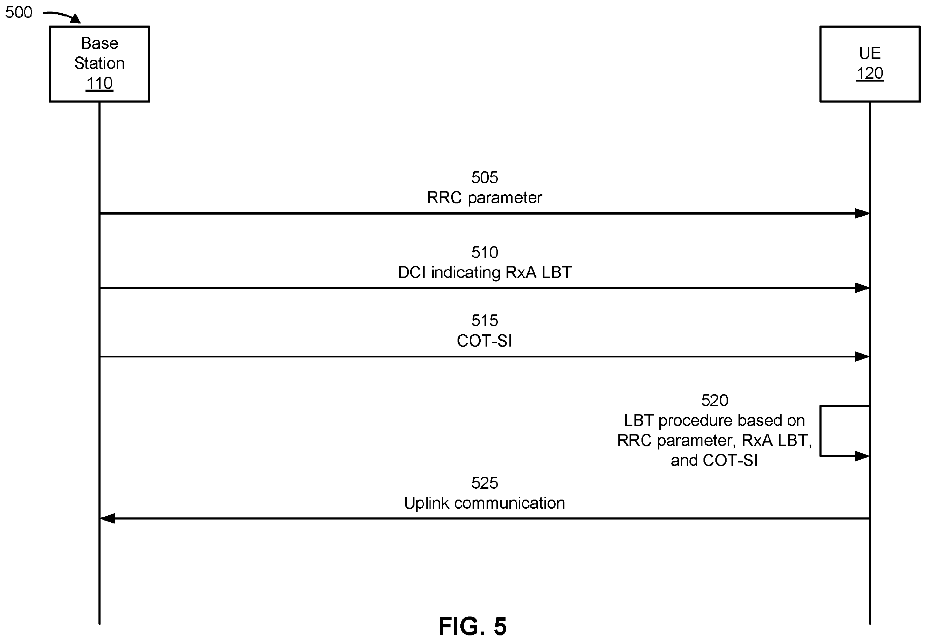

Fig. 5 is a diagram illustrating an example 500 associated with signaling LBT type using RRC and DCI, in accordance with the present disclosure. As shown in Fig. 5, a base station 110 and a UE 120 may communicate with one another (e.g., on a wireless network, such as wireless network 100 of Fig. 1). The base station 110 may transmit data and other signals to the UE 120 on a downlink, and the UE 120 may transmit data and other signals to the base station 110 on an uplink.

The base station 110 may transmit, and the UE 120 may receive, an indication associated with performing LBT relative to a COT. For example, as shown by reference number 505, the indication may include an RRC parameter (e.g., as defined in 3GPP specifications and/or another standard). The RRC parameter may be as described in connection with Fig. 3.

Furthermore, as shown by reference number 510, the base station 110 may transmit, and the UE 120 may receive, DCI that indicates an LBT type. For example, the DCI may include a *ChannelAccess-CPext* and/or a *ChannelAccess-CPext-CAPC* parameter (e.g., as defined in 3GPP specifications and/or another standard). The DCI parameter may be as described in connection with Fig. 3. Additionally, the DCI may indicate whether the base station 110 is requesting RxA LBT from the UE 120.

The base station 110 may further transmit, and the UE 120 may receive, an indication of a COT. For example, the base station 110 may have performed a CCA procedure and/or another LBT procedure to obtain the COT on a channel that the UE 120 will use to transmit to the base station 110. As shown by reference number 515, the indication may include a COT-SI message.

As shown by reference number 520, the UE 120 may perform an LBT procedure based at least in part on the indication described in connection with reference number 505 (e.g., the RRC parameter). Additionally, the LBT procedure may be based at least in part on the DCI described in connection with reference number 510 (e.g., the DCI parameter) and the indication described in connection with reference number 515 (e.g., the COT-SI). For example, the LBT procedure may be a Cat3 LBT procedure, a Cat2 LBT procedure, or a Cat1 LBT procedure. In one example, the UE 120 may select the LBT procedure according to example Table 5 or example Table 6 below:

**Table 5**

| **RRC parameter** | **DCI parameter** | **RxA LBT requested?** | **LBT procedure** |
|---|---|---|---|
| Absent | Absent | N/A | Catl (e.g., base station 110 has COT) |
| Absent | Present (e.g., any codepoint) | No | Upgrade from Cat3 to Catl if COT-SI received |
| Absent | Present (e.g., any codepoint) | Yes | Upgrade from Cat3 to Cat2 if COT-SI received |
| Present | Absent | N/A | Catl (e.g., base station 110 has COT) |
| Present | First codepoint | No | Cat2 |
| Present | First codepoint | Yes | Cat2 |
| Present | Second codepoint | No | Upgrade from Cat3 to Cat2 if COT-SI received |
| Present | Second codepoint | Yes | Upgrade from Cat3 to Cat2 if COT-SI received |

**Table 6**

| **RRC parameter** | **DCI parameter** | **RxA LBT requested?** | **LBT procedure** |
|---|---|---|---|
| First codepoint | First codepoint | N/A | Catl (e.g., base station 110 has COT) |
| First codepoint | Second codepoint | No | Upgrade from Cat3 to Cat1 if COT-SI received |
| First codepoint | Second codepoint | Yes | Upgrade from Cat3 to Cat2 if COT-SI received |
| Second codepoint | First codepoint | N/A | Catl (e.g., base station 110 has COT) |
| Second codepoint | Third codepoint | No | Cat2 |
| Second codepoint | Third codepoint | Yes | Cat2 |
| Second codepoint | Second codepoint | No | Upgrade from Cat3 to Cat2 if COT-SI received |
| Second codepoint | Second codepoint | Yes | Upgrade from Cat3 to Cat2 if COT-SI received |

In some aspects, the UE 120 may additionally determine a gap between an end of a downlink period (e.g., a downlink period in which the RRC parameter, the DCI parameter, and/or the COT-SI is received) and a beginning of an uplink period (e.g., in which the UE 120 will transmit the uplink communication as described in connection with reference number 525). Accordingly, the UE 120 may upgrade to a Cat1 LBT procedure based at least in part on the gap (e.g., when the gap satisfies a threshold). When the gap does not satisfy the threshold, the UE 120 may upgrade to a Cat2 LBT procedure instead of a Catl LBT procedure even when the COT-SI is received. In some aspects, the UE 120 may determine the gap based at least in part on the RRC parameter. For example, the UE 120 may determine the gap when the RRC parameter is "Present" as shown in example Table 5, or the RRC parameter is set to "Second codepoint" as shown in example Table 6. Additionally, or alternatively, the UE 120 may determine the gap when the base station 110 does not indicate that RxA LBT is requested.

Accordingly, as shown by reference number 525, the UE 120 may transmit, and the base station 110 may receive, an uplink communication (e.g., control information, such as UCI on a PUCCH, data on a PUSCH, and/or another type of uplink signal). In some aspects, the uplink communication is associated with a CG from the base station 110, such as a CG-PUSCH transmission, a P-SRS or an SP-SRS, and/or a P-PUCCH or an SP-PUCCH. As an alternative, the uplink communication is associated with a DG from the base station 110.

By using techniques as described in connection with Fig. 5, the base station 110 indicates (e.g., via RRC signaling) to the UE 120 when the base station 110 is requesting RxA LBT. As a result, the base station 110 improves reception from the UE 120, which reduces chances of retransmission for the uplink communication. Reduced chances of retransmission conserve power and processing resources at the UE 120 as well as network resources between the UE 120 and the base station 110.

As indicated above, Fig. 5 is provided as an example. Other examples may differ from what is described with respect to Fig. 5.

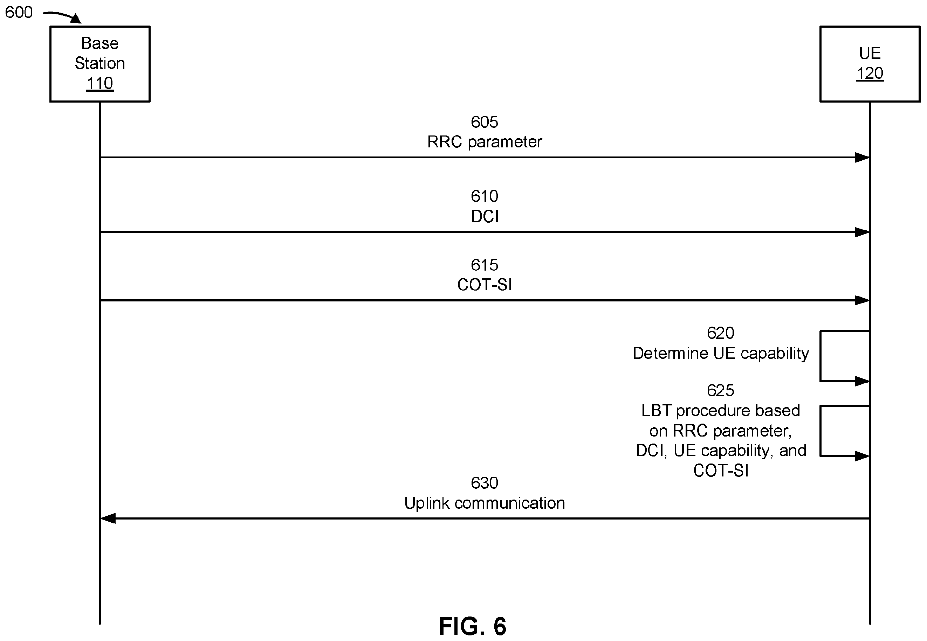

Fig. 6 is a diagram illustrating an example 600 associated with signaling LBT type using RRC and DCI, in accordance with the present disclosure. As shown in Fig. 6, a base station 110 and a UE 120 may communicate with one another (e.g., on a wireless network, such as wireless network 100 of Fig. 1). The base station 110 may transmit data and other signals to the UE 120 on a downlink, and the UE 120 may transmit data and other signals to the base station 110 on an uplink.

The base station 110 may transmit, and the UE 120 may receive, an indication associated with performing LBT relative to a COT. For example, as shown by reference number 605, the indication may include an RRC parameter (e.g., as defined in 3GPP specifications and/or another standard). The RRC parameter may be as described in connection with Fig. 3.

Furthermore, as shown by reference number 610, the base station 110 may transmit, and the UE 120 may receive, DCI that indicates an LBT type. For example, the DCI may include a *ChannelAccess-CPext* and/or a *ChannelAccess-CPext-CAPC* parameter (e.g., as defined in 3GPP specifications and/or another standard). The DCI parameter may be as described in connection with Fig. 3.

The base station 110 may further transmit, and the UE 120 may receive, an indication of a COT. For example, the base station 110 may have performed a CCA procedure and/or another LBT procedure to obtain the COT on a channel that the UE 120 will use to transmit to the base station 110. As shown by reference number 615, the indication may include a COT-SI message.

As shown by reference number 620, the UE 120 may determine whether the UE 120 is associated with a Cat2 LBT capability. For example, the UE 120 may be unable to perform a Cat2 LBT procedure when the hardware and/or software of the UE 120 is not sufficiently fast to perform a CCA procedure and/or another LBT procedure within the fixed window associated with the Cat2 LBT procedure.

As shown by reference number 625, the UE 120 may perform an LBT procedure based at least in part on the indication described in connection with reference number 605 (e.g., the RRC parameter). Additionally, the LBT procedure may be based at least in part on the DCI described in connection with reference number 610 (e.g., the DCI parameter), the indication described in connection with reference number 615 (e.g., the COT-SI), and a capability associated with the UE 120 (e.g., as described in connection with reference number 620). For example, the LBT procedure may be a Cat3 LBT procedure, a Cat2 LBT procedure, or a Cat1 LBT procedure. In one example, the UE 120 may select the LBT procedure according to example Table 7 or example Table 8 below:

**Table 7**

| **RRC parameter** | **DCI parameter** | **Cat2 LBT capability?** | **LBT procedure** |
|---|---|---|---|
| Absent | Absent | N/A | Catl (e.g., base station 110 has COT) |
| Absent | Present (e.g., any codepoint) | No | Upgrade from Cat3 to Cat1 if COT-SI received |
| Absent | Present (e.g., any codepoint) | Yes | Upgrade from Cat3 to Cat2 if COT-SI received |
| Present | Absent | N/A | Catl (e.g., base station 110 has COT) |
| Present | First codepoint | No | Cat3 (UE 120 cannot perform Cat2) |
| Present | First codepoint | Yes | Cat2 |
| Present | Second codepoint | No | Cat3 (UE 120 cannot perform Cat2) |
| Present | Second codepoint | Yes | Upgrade from Cat3 to Cat1 if COT-SI received |

**Table 8**

| **RRC parameter** | **DCI parameter** | **Cat2 LBT capability?** | **LBT procedure** |
|---|---|---|---|
| First codepoint | First codepoint | N/A | Catl (e.g., base station 110 has COT) |
| First codepoint | Second codepoint | No | Upgrade from Cat3 to Catl if COT-SI received |
| First codepoint | Second codepoint | Yes | Upgrade from Cat3 to Cat2 if COT-SI received |
| Second codepoint | First codepoint | N/A | Catl (e.g., base station 110 has COT) |
| Second codepoint | Third codepoint | No | Cat3 (UE 120 cannot perform Cat2) |
| Second codepoint | Third codepoint | Yes | Cat2 |
| Second codepoint | Second codepoint | No | Cat3 (UE 120 cannot perform Cat2) |
| Second codepoint | Second codepoint | Yes | Upgrade from Cat3 to Catl if COT-SI received |

Example 600 may be combined with example 500 and/or example 400. For example, the UE 120 may further determine a gap between an end of a downlink period (e.g., a downlink period in which the RRC parameter, the DCI parameter, and/or the COT-SI is received) and a beginning of an uplink period (e.g., in which the UE 120 will transmit the uplink communication as described in connection with reference number 525). Accordingly, the UE 120 may upgrade to a Cat1 LBT procedure based at least in part on the gap (e.g., when the gap satisfies a threshold). When the gap does not satisfy the threshold, the UE 120 may upgrade to a Cat2 LBT procedure instead of a Cat1 LBT procedure when the UE 120 is capable of performing the Cat2 LBT procedure. In some aspects, the UE 120 may determine the gap based at least in part on the RRC parameter. For example, the UE 120 may determine the gap when the RRC parameter is "Present" as shown in example Table 7, or the RRC parameter is set to "Second codepoint" as shown in example Table 8. Additionally, or alternatively, the UE 120 may upgrade to a Cat2 LBT procedure instead of a Cat1 LBT procedure when the base station 110 indicates that RxA LBT is requested when the UE 120 is capable of performing the Cat2 LBT procedure. However, the UE 120 may fallback to a Cat3 LBT procedure when the base station 110 indicates that RxA LBT is requested and the UE 120 is not capable of performing the Cat2 LBT procedure, even when the COT-SI is received.

Accordingly, as shown by reference number 630, the UE 120 may transmit, and the base station 110 may receive, an uplink communication (e.g., control information, such as UCI on a PUCCH, data on a PUSCH, and/or another type of uplink signal). In some aspects, the uplink communication is associated with a CG from the base station 110, such as a CG-PUSCH transmission, a P-SRS or an SP-SRS, and/or a P-PUCCH or an SP-PUCCH. As an alternative, the uplink communication is associated with a DG from the base station 110.

By using techniques as described in connection with Fig. 6, the base station 110 indicates (e.g., via RRC signaling) to the UE 120 whether to upgrade an LBT procedure (e.g., from a Cat3 LBT procedure to a Cat2 or a Cat1 LBT procedure, or from a Cat2 LBT procedure to a Cat1 LBT procedure) when the base station 110 indicates a COT (e.g., via a COT-SI). As a result, the UE 120 conserves power and processing resources when the UE 120 upgrades the LBT procedure. Additionally, the UE 120 may still upgrade even when the UE 120 is not capable of performing a Cat2 LBT procedure.

As indicated above, Fig. 6 is provided as an example. Other examples may differ from what is described with respect to Fig. 6.

Fig. 7 is a diagram illustrating an example process 700 performed, for example, by a UE, in accordance with the present disclosure. Example process 700 is an example where the UE (e.g., UE 120 and/or apparatus 900 of Fig. 9) performs operations associated with RRC and DCI signaling for LBT type.

As shown in Fig. 7, in some aspects, process 700 may include receiving, from a base station (e.g., base station 110 and/or apparatus 1000 of Fig. 10), an indication associated with performing listen-before-talk relative to a COT (block 710). For example, the UE (e.g., using communication manager 140 and/or reception component 902, depicted in Fig. 9) may receive, from a base station, an indication associated with performing listen-before-talk relative to a COT, as described herein.

As further shown in Fig. 7, in some aspects, process 700 may include transmitting, to the base station, an uplink communication that is transmitted using a listen-before-talk procedure based at least in part on the indication (block 720). For example, the UE (e.g., using communication manager 140 and/or transmission component 904, depicted in Fig. 9) may transmit, to the base station, an uplink communication that is transmitted using a listen-before-talk procedure based at least in part on the indication, as described herein.

Process 700 may include additional aspects, such as any single aspect or any combination of aspects described below and/or in connection with one or more other processes described elsewhere herein.

In a first aspect, the indication is included in an RRC message.

In a second aspect, alone or in combination with the first aspect, the uplink communication is associated with a configured grant.

In a third aspect, alone or in combination with one or more of the first and second aspects, the uplink communication is associated with a dynamic grant.

In a fourth aspect, alone or in combination with one or more of the first through third aspects, process 700 further includes receiving (e.g., using communication manager 140 and/or reception component 902), from the base station, an indication of the COT, such that the listen-before-talk procedure is based at least in part on the indication of the COT.

In a fifth aspect, alone or in combination with one or more of the first through fourth aspects, the LBT procedure is a Cat1 LBT procedure based at least in part on the indication of the COT.

In a sixth aspect, alone or in combination with one or more of the first through fifth aspects, the LBT procedure is a Cat2 LBT procedure based at least in part on the indication of the COT.

In a seventh aspect, alone or in combination with one or more of the first through sixth aspects, process 700 further includes determining (e.g., using communication manager 140 and/or determination component 910, depicted in Fig. 9) a gap between an end of a downlink period and a beginning of an uplink period, such that the LBT procedure is a Catl LBT procedure or a Cat2 LBT procedure based at least in part on the gap.

In an eighth aspect, alone or in combination with one or more of the first through seventh aspects, process 700 further includes receiving (e.g., using communication manager 140 and/or reception component 902), from the base station, DCI that indicates a listen-before-talk type, such that the listen-before-talk procedure is based at least in part on the DCI.

In a ninth aspect, alone or in combination with one or more of the first through eighth aspects, the LBT procedure is a Cat1 LBT procedure based at least in part on the DCI.

In a tenth aspect, alone or in combination with one or more of the first through ninth aspects, the LBT procedure is a Cat3 LBT procedure based at least in part on the DCI.

In an eleventh aspect, alone or in combination with one or more of the first through tenth aspects, the LBT procedure is a Cat2 LBT procedure based at least in part on the DCI.

In a twelfth aspect, alone or in combination with one or more of the first through eleventh aspects, the DCI indicates that the base station is requesting receiver-assisted LBT.

In a thirteenth aspect, alone or in combination with one or more of the first through twelfth aspects, process 700 further includes receiving (e.g., using communication manager 140 and/or reception component 902), from the base station, an indication of the COT, such that the LBT procedure is a Cat1 LBT procedure based at least in part on the DCI and the indication of the COT.

In a fourteenth aspect, alone or in combination with one or more of the first through thirteenth aspects, process 700 further includes receiving (e.g., using communication manager 140 and/or reception component 902), from the base station, an indication of the COT, such that the LBT procedure is a Cat2 LBT procedure based at least in part on the DCI and the indication of the COT.

In a fifteenth aspect, alone or in combination with one or more of the first through fourteenth aspects, process 700 further includes receiving (e.g., using communication manager 140 and/or reception component 902), from the base station, an indication of the COT, and determining (e.g., using communication manager 140 and/or determination component 910) a gap between an end of a downlink period and a beginning of an uplink period, such that the LBT procedure is a Cat1 LBT procedure or a Cat2 LBT procedure based at least in part on the gap.

In a sixteenth aspect, alone or in combination with one or more of the first through fifteenth aspects, process 700 further includes receiving (e.g., using communication manager 140 and/or reception component 902), from the base station, an indication of the COT, and determining (e.g., using communication manager 140 and/or determination component 910) that the UE is not associated with a Cat2 LBT capability, such that the LBT procedure is a Cat3 LBT procedure based at least in part on the UE not being associated with the Cat2 LBT capability.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

Fig. 8 is a diagram illustrating an example process 800 performed, for example, by a base station, in accordance with the present disclosure. Example process 800 is an example where the base station (e.g., base station 110 and/or apparatus 1000 of Fig. 10) performs operations associated with RRC and DCI signaling for LBT type.

As shown in Fig. 8, in some aspects, process 800 may include transmitting, to a UE (e.g., UE 120 and/or apparatus 900 of Fig. 9), an indication associated with performing listen-before-talk relative to a COT (block 810). For example, the base station (e.g., using communication manager 150 and/or transmission component 1004, depicted in Fig. 10) may transmit, to a UE, an indication associated with performing listen-before-talk relative to a COT, as described herein.

As further shown in Fig. 8, in some aspects, process 800 may include receiving, from the UE, an uplink communication that was transmitted using a listen-before-talk procedure based at least in part on the indication (block 820). For example, the base station (e.g., using communication manager 150 and/or reception component 1002, depicted in Fig. 10) may receive, from the UE, an uplink communication that was transmitted using a listen-before-talk procedure based at least in part on the indication, as described herein.

Process 800 may include additional aspects, such as any single aspect or any combination of aspects described below and/or in connection with one or more other processes described elsewhere herein.

In a first aspect, the indication is included in an RRC message.

In a second aspect, alone or in combination with the first aspect, the uplink communication is associated with a configured grant.

In a third aspect, alone or in combination with one or more of the first and second aspects, the uplink communication is associated with a dynamic grant.

In a fourth aspect, alone or in combination with one or more of the first through third aspects, process 800 further includes transmitting (e.g., using communication manager 150 and/or transmission component 1004), to the UE, an indication of the COT, such that the listen-before-talk procedure is based at least in part on the indication of the COT.

In a fifth aspect, alone or in combination with one or more of the first through fourth aspects, the LBT procedure is a Cat1 LBT procedure based at least in part on the indication of the COT.

In a sixth aspect, alone or in combination with one or more of the first through fifth aspects, the LBT procedure is a Cat2 LBT procedure based at least in part on the indication of the COT.

In a seventh aspect, alone or in combination with one or more of the first through sixth aspects, the LBT procedure is a Cat1 LBT procedure or a Cat2 LBT procedure based at least in part on a gap between an end of a downlink period and a beginning of an uplink period.

In an eighth aspect, alone or in combination with one or more of the first through seventh aspects, process 800 further includes transmitting (e.g., using communication manager 150 and/or transmission component 1004), to the UE, DCI that indicates a listen-before-talk type, such that the listen-before-talk procedure is based at least in part on the DCI.

In a ninth aspect, alone or in combination with one or more of the first through eighth aspects, the LBT procedure is a Cat1 LBT procedure based at least in part on the DCI.

In a tenth aspect, alone or in combination with one or more of the first through ninth aspects, the LBT procedure is a Cat3 LBT procedure based at least in part on the DCI.

In an eleventh aspect, alone or in combination with one or more of the first through tenth aspects, the LBT procedure is a Cat2 LBT procedure based at least in part on the DCI.

In a twelfth aspect, alone or in combination with one or more of the first through eleventh aspects, the DCI indicates that the base station is requesting receiver-assisted LBT (e.g., using communication manager 150 and/or RxA LBT component 1008).

In a thirteenth aspect, alone or in combination with one or more of the first through twelfth aspects, process 800 further includes transmitting (e.g., using communication manager 150 and/or transmission component 1004), to the UE, an indication of the COT, such that the LBT procedure is a Cat1 LBT procedure based at least in part on the DCI and the indication of the COT.

In a fourteenth aspect, alone or in combination with one or more of the first through thirteenth aspects, process 800 further includes transmitting (e.g., using communication manager 150 and/or transmission component 1004), to the UE, an indication of the COT, such that the LBT procedure is a Cat2 LBT procedure based at least in part on the DCI and the indication of the COT.

In a fifteenth aspect, alone or in combination with one or more of the first through fourteenth aspects, process 800 further includes transmitting (e.g., using communication manager 150 and/or transmission component 1004), to the UE, an indication of the COT, such that the LBT procedure is a Cat1 LBT procedure or a Cat2 LBT procedure based at least in part on a gap between an end of a downlink period and a beginning of an uplink period.

In a sixteenth aspect, alone or in combination with one or more of the first through fifteenth aspects, process 800 further includes transmitting (e.g., using communication manager 150 and/or transmission component 1004), to the UE, an indication of the COT, such that the LBT procedure is a Cat3 LBT procedure based at least in part on the UE not being associated with a Cat2 LBT capability.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram of an example apparatus 900 for wireless communication. The apparatus 900 may be a UE, or a UE may include the apparatus 900. In some aspects, the apparatus 900 includes a reception component 902 and a transmission component 904, which may be in communication with one another (for example, via one or more buses and/or one or more other components). As shown, the apparatus 900 may communicate with another apparatus 906 (such as a UE, a base station, or another wireless communication device) using the reception component 902 and the transmission component 904. As further shown, the apparatus 900 may include the communication manager 140. The communication manager 140 may include one or more of an LBT component 908 and/or a determination component 910, among other examples.

In some aspects, the apparatus 900 may be configured to perform one or more operations described herein in connection with Figs. 3-6. Additionally, or alternatively, the apparatus 900 may be configured to perform one or more processes described herein, such as process 700 of Fig. 7, or a combination thereof. In some aspects, the apparatus 900 and/or one or more components shown in Fig. 9 may include one or more components of the UE described in connection with Fig. 2. Additionally, or alternatively, one or more components shown in Fig. 9 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 902 may receive communications, such as reference signals, control information, data communications, or a combination thereof, from the apparatus 906. The reception component 902 may provide received communications to one or more other components of the apparatus 900. In some aspects, the reception component 902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 900. In some aspects, the reception component 902 may include one or more antennas, a modem, a demodulator, a MIMO detector, a receive processor, a controller/processor, a memory, or a combination thereof, of the UE described in connection with Fig. 2.

The transmission component 904 may transmit communications, such as reference signals, control information, data communications, or a combination thereof, to the apparatus 906. In some aspects, one or more other components of the apparatus 900 may generate communications and may provide the generated communications to the transmission component 904 for transmission to the apparatus 906. In some aspects, the transmission component 904 may perform signal processing on the generated communications (such as filtering, amplification, modulation, digital-to-analog conversion, multiplexing, interleaving, mapping, or encoding, among other examples), and may transmit the processed signals to the apparatus 906. In some aspects, the transmission component 904 may include one or more antennas, a modem, a modulator, a transmit MIMO processor, a transmit processor, a controller/processor, a memory, or a combination thereof, of the UE described in connection with Fig. 2. In some aspects, the transmission component 904 may be co-located with the reception component 902 in a transceiver.

In some aspects, the reception component 902 may receive (e.g., from the apparatus 906, such as a base station) an indication associated with performing LBT relative to a COT. Accordingly, the transmission component 904 may transmit (e.g., to the apparatus 906) an uplink communication using an LBT procedure based at least in part on the indication received by the reception component 902. For example, the LBT component 908 may perform a CCA procedure and/or another LBT procedure based at least in part on the indication. The LBT component 908 may include one or more antennas, a modem, a demodulator, a MIMO detector, a receive processor, a controller/processor, a memory, or a combination thereof, of the UE described in connection with Fig. 2.

In some aspects, the reception component 902 may receive (e.g., from the apparatus 906) an indication of the COT. Accordingly, the LBT component 908 may perform the LBT procedure based at least in part on the indication of the COT.

Additionally, or alternatively, the determination component 910 may determine a gap between an end of a downlink period and a beginning of an uplink period. The determination component 910 may include a modem, a demodulator, a modulator, a MIMO detector, a receive processor, a transmit MIMO processor, a transmit processor, a controller/processor, a memory, or a combination thereof, of the UE described in connection with Fig. 2. Accordingly, the LBT component 908 may perform a Cat1 LBT procedure or a Cat2 LBT procedure based at least in part on the gap.

Additionally, or alternatively, the reception component 902 may receive (e.g., from the apparatus 906) DCI that indicates an LBT type. Accordingly, the LBT component 908 may perform the LBT procedure based at least in part on the DCI. For example, the LBT procedure may be a Cat1 LBT procedure, a Cat2 LBT procedure, or a Cat3 LBT procedure based at least in part on the DCI and an indication of the COT.

Additionally, or alternatively, the determination component 910 may determine that the apparatus 900 is not associated with a Cat2 LBT capability. Accordingly, the LBT component 908 may perform a Cat3 LBT procedure based at least in part on the apparatus 900 not being associated with the Cat2 LBT capability.

The number and arrangement of components shown in Fig. 9 are provided as an example. In practice, there may be additional components, fewer components, different components, or differently arranged components than those shown in Fig. 9. Furthermore, two or more components shown in Fig. 9 may be implemented within a single component, or a single component shown in Fig. 9 may be implemented as multiple, distributed components. Additionally, or alternatively, a set of (one or more) components shown in Fig. 9 may perform one or more functions described as being performed by another set of components shown in Fig. 9.

Fig. 10 is a diagram of an example apparatus 1000 for wireless communication. The apparatus 1000 may be a base station, or a base station may include the apparatus 1000. In some aspects, the apparatus 1000 includes a reception component 1002 and a transmission component 1004, which may be in communication with one another (for example, via one or more buses and/or one or more other components). As shown, the apparatus 1000 may communicate with another apparatus 1006 (such as a UE, a base station, or another wireless communication device) using the reception component 1002 and the transmission component 1004. As further shown, the apparatus 1000 may include the communication manager 150. The communication manager 150 may include an RxA LBT component 1008, among other examples.

In some aspects, the apparatus 1000 may be configured to perform one or more operations described herein in connection with Figs. 3-6. Additionally, or alternatively, the apparatus 1000 may be configured to perform one or more processes described herein, such as process 800 of Fig. 8, or a combination thereof. In some aspects, the apparatus 1000 and/or one or more components shown in Fig. 10 may include one or more components of the base station described in connection with Fig. 2. Additionally, or alternatively, one or more components shown in Fig. 10 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1002 may receive communications, such as reference signals, control information, data communications, or a combination thereof, from the apparatus 1006. The reception component 1002 may provide received communications to one or more other components of the apparatus 1000. In some aspects, the reception component 1002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1000. In some aspects, the reception component 1002 may include one or more antennas, a modem, a demodulator, a MIMO detector, a receive processor, a controller/processor, a memory, or a combination thereof, of the base station described in connection with Fig. 2.

The transmission component 1004 may transmit communications, such as reference signals, control information, data communications, or a combination thereof, to the apparatus 1006. In some aspects, one or more other components of the apparatus 1000 may generate communications and may provide the generated communications to the transmission component 1004 for transmission to the apparatus 1006. In some aspects, the transmission component 1004 may perform signal processing on the generated communications (such as filtering, amplification, modulation, digital-to-analog conversion, multiplexing, interleaving, mapping, or encoding, among other examples), and may transmit the processed signals to the apparatus 1006. In some aspects, the transmission component 1004 may include one or more antennas, a modem, a modulator, a transmit MIMO processor, a transmit processor, a controller/processor, a memory, or a combination thereof, of the base station described in connection with Fig. 2. In some aspects, the transmission component 1004 may be co-located with the reception component 1002 in a transceiver.

In some aspects, the transmission component 1004 may transmit (e.g., to the apparatus 1006, such as a UE) an indication associated with performing LBT relative to a COT. Accordingly, the reception component 1002 may receive (e.g., from the apparatus 1006) an uplink communication that was transmitted using an LBT procedure based at least in part on the indication.

In some aspects, the transmission component 1004 may transmit (e.g., to the apparatus 1006) an indication of the COT such that the LBT procedure is based at least in part on the indication of the COT.

Additionally, or alternatively, the transmission component 1004 may transmit (e.g., to the apparatus 1006) DCI that indicates an LBT type such that the LBT procedure is based at least in part on the DCI. In some aspects, the DCI may indicate that the apparatus 1000 is requesting RxA LBT. Accordingly, the RxA LBT component 1008 may perform TxA LBT for the uplink communication. The RxA LBT component 1008 may include one or more antennas, a modem, a demodulator, a MIMO detector, a receive processor, a controller/processor, a memory, or a combination thereof, of the base station described in connection with Fig. 2.

In some aspects, the LBT procedure may be a Cat1 LBT procedure or a Cat2 LBT procedure based at least in part on a gap between an end of a downlink period and a beginning of an uplink period. Additionally, or alternatively, the LBT procedure may be a Cat3 LBT procedure based at least in part on the apparatus 1006 not being associated with a Cat2 LBT capability.

The number and arrangement of components shown in Fig. 10 are provided as an example. In practice, there may be additional components, fewer components, different components, or differently arranged components than those shown in Fig. 10. Furthermore, two or more components shown in Fig. 10 may be implemented within a single component, or a single component shown in Fig. 10 may be implemented as multiple, distributed components. Additionally, or alternatively, a set of (one or more) components shown in Fig. 10 may perform one or more functions described as being performed by another set of components shown in Fig. 10.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. An apparatus for wireless communication at a user equipment, UE, the apparatus comprising:
a memory; and
one or more processors, coupled to the memory, configured to:
receive (710), from a base station, an indication associated with performing listen-before-talk relative to a channel occupancy time, COT, wherein the indication is included in a radio resource control, RRC, message and includes an RRC parameter, and wherein the RRC parameter indicates whether the UE is to upgrade a listen-before-talk procedure associated with the COT; and
transmit (720), to the base station, an uplink communication, wherein the uplink communication is transmitted using the listen-before-talk procedure based at least in part on the indication.

2. The apparatus of claim 1, wherein the uplink communication is associated with a configured grant or a dynamic grant.

3. The apparatus of claim 1, wherein the one or more processors are further configured to:
receive, from the base station, an indication of the COT,
wherein the listen-before-talk procedure is based at least in part on the indication of the COT.

4. The apparatus of claim 3, wherein
the listen-before-talk, LBT, procedure is a category 1, Cat1, LBT procedure based at least in part on the indication of the COT; or
the listen-before-talk, LBT, procedure is a category 2, Cat2, LBT procedure based at least in part on the indication of the COT.

5. The apparatus of claim 3, wherein the one or more processors are further configured to:
determine a gap between an end of a downlink period and a beginning of an uplink period,
wherein the listen-before-talk, LBT, procedure is a category 1, Cat1, LBT procedure or a category 2, Cat2, LBT procedure based at least in part on the gap.

6. The apparatus of claim 1, wherein the one or more processors are further configured to:
receive, from the base station, downlink control information, DCI, that indicates a listen-before-talk type,
wherein the listen-before-talk procedure is based at least in part on the DCI.

7. The apparatus of claim 6, wherein
the listen-before-talk, LBT, procedure is a category 1, Cat1, LBT procedure based at least in part on the DCI; or
the listen-before-talk, LBT, procedure is a category 3, Cat3, LBT procedure based at least in part on the DCI; or
the listen-before-talk, LBT, procedure is a category 2, Cat2, LBT procedure based at least in part on the DCI.

8. The apparatus of claim 6, wherein the one or more processors are further configured to:
receive, from the base station, an indication of the COT,
wherein the listen-before-talk, LBT, procedure is a category 1, Cat1, LBT procedure based at least in part on the DCI and the indication of the COT.

9. The apparatus of claim 6, wherein the one or more processors are further configured to:
receive, from the base station, an indication of the COT,
wherein the listen-before-talk, LBT, procedure is a category 2, Cat2, LBT procedure based at least in part on the DCI and the indication of the COT.

10. The apparatus of claim 6, wherein the one or more processors are further configured to:
receive, from the base station, an indication of the COT; and
determine a gap between an end of a downlink period and a beginning of an uplink period,
wherein the listen-before-talk, LBT, procedure is a category 1, Cat1, LBT procedure or a category 2, Cat2, LBT procedure based at least in part on the gap.

11. The apparatus of claim 6, wherein the one or more processors are further configured to:
receive, from the base station, an indication of the COT; and
determine that the UE is not associated with a category 2, Cat2, listen-before-talk, LBT, capability,
wherein the LBT procedure is a category 3, Cat3, LBT procedure based at least in part on the UE not being associated with the Cat2 LBT capability.

12. An apparatus for wireless communication at a base station, the apparatus comprising:
a memory; and
one or more processors, coupled to the memory, configured to:
transmit (810), to a user equipment, UE, an indication associated with performing listen-before-talk relative to a channel occupancy time, COT, wherein the indication is included in a radio resource control, RRC, message and includes an RRC parameter, and wherein the RRC parameter indicates whether the UE is to upgrade a listen-before-talk procedure associated with the COT; and
receive (820), from the UE, an uplink communication, wherein the uplink communication was transmitted using the listen-before-talk procedure based at least in part on the indication.

13. A method of wireless communication performed by a user equipment, UE, the method comprising:
receiving (710), from a base station, an indication associated with performing listen-before-talk relative to a channel occupancy time, COT, wherein the indication is included in a radio resource control, RRC, message and includes an RRC parameter, and wherein the RRC parameter indicates whether the UE is to upgrade a listen-before-talk procedure associated with the COT; and
transmitting (720), to the base station, an uplink communication, wherein the uplink communication is transmitted using the listen-before-talk procedure based at least in part on the indication.

14. A method of wireless communication performed by a base station, the method comprising:
transmitting (810), to a user equipment, UE, an indication associated with performing listen-before-talk relative to a channel occupancy time, COT, wherein the indication is included in a radio resource control, RRC, message and includes an RRC parameter, and wherein the RRC parameter indicates whether the UE is to upgrade a listen-before-talk procedure associated with the COT; and
receiving (820), from the UE, an uplink communication, wherein the uplink communication was transmitted using the listen-before-talk procedure based at least in part on the indication.

## Patentansprüche

1. Eine Vorrichtung für eine drahtlose Kommunikation an einem Benutzergerät (User Equipment bzw. UE), wobei die Vorrichtung aufweist:
einen Speicher, und
einen oder mehrere Prozessoren, die mit dem Speicher gekoppelt sind und konfiguriert sind zum:
Empfangen (710), von einer Basisstation, einer Angabe, die mit dem Durchführen eines "Listen-before-Talk" bzw. "Hören vor Senden" in Bezug auf eine Kanalbelegungszeit (Channel Occupancy Time bzw. COT) assoziiert ist, wobei die Angabe in einer Funkressourcensteuerung (Radio Resource Control bzw. RRC)-Nachricht enthalten ist und einen RRC-Parameter enthält, und wobei der RRC-Parameter angibt, ob das UE eine mit der COT assoziierten Listen-before-Talk-Prozedur hochstufen soll, und
Senden (720), an die Basisstation, einer Uplink-Kommunikation, wobei die Uplink-Kommunikation unter Verwendung der Listen-before-Talk-Prozedur basierend wenigstens teilweise auf der Angabe gesendet wird.

2. Vorrichtung nach Anspruch 1, wobei die Uplink-Kommunikation mit einer konfigurierten Gewährung oder einer dynamischen Gewährung assoziiert ist.

3. Vorrichtung nach Anspruch 1, wobei der eine oder die mehreren Prozessoren weiterhin konfiguriert sind zum:
Empfangen, von der Basisstation, einer Angabe der COT,
wobei die Listen-before-Talk-Prozedur wenigstens teilweise auf der Angabe der COT basiert.

4. Vorrichtung nach Anspruch 3, wobei:
die Listen-before-Talk (LBT)-Prozedur eine LBT-Prozedur der Kategorie 1 (Category 1 bzw. Cat1) basierend wenigstens teilweise auf der Angabe der COT ist, oder
die Listen-before-Talk (LBT)-Prozedur eine LBT-Prozedur der Kategorie 2 (Category 2 bzw. Cat2) basierend wenigstens teilweise auf der Angabe der COT ist.

5. Vorrichtung nach Anspruch 3, wobei der eine oder die mehreren Prozessoren weiterhin konfiguriert sind zum:
Bestimmen einer Lücke zwischen einem Ende einer Downlink-Periode und einem Anfang einer Uplink-Periode,
wobei die Listen-before-Talk (LBT)-Prozedur eine LBT-Prozedur der Kategorie 1 (Category 1 bzw. Cat1) oder eine LBT-Prozedur der Kategorie 2 (Category 2 bzw. Cat2) basierend wenigstens teilweise auf der Lücke ist.

6. Vorrichtung nach Anspruch 1, wobei der eine oder die mehreren Prozessoren weiterhin konfiguriert sind zum:
Empfangen, von der Basisstation, von Downlink-Steuerinformationen (Downlink Control Information bzw. DCI), die einen Listen-before-Talk-Typ angeben,
wobei die Listen-before-Talk-Prozedur wenigstens teilweise auf den DCI basiert.

7. Vorrichtung nach Anspruch 6, wobei:
die Listen-before-Talk (LBT)-Prozedur eine LBT-Prozedur der Kategorie 1 (Category 1 bzw. Cat1) basierend wenigstens teilweise auf den DCI ist, oder
die Listen-before-Talk (LBT)-Prozedur eine LBT-Prozedur der Kategorie 3 (Category 3 bzw. Cat3) basierend wenigstens teilweise auf den DCI ist, oder
die Listen-before-Talk (LBT)-Prozedur eine LBT-Prozedur der Kategorie 2 (Category 2 bzw. Cat2) basierend wenigstens teilweise auf den DCI ist.

8. Vorrichtung nach Anspruch 6, wobei der eine oder die mehreren Prozessoren weiterhin konfiguriert sind zum:
Empfangen, von der Basisstation, einer Angabe der COT,
wobei die Listen-before-Talk (LBT)-Prozedur eine LBT-Prozedur der Kategorie 1 (Category 1 bzw. Cat1) basierend wenigstens teilweise auf den DCI und der Angabe der COT ist.

9. Vorrichtung nach Anspruch 6, wobei der eine oder die mehreren Prozessoren weiterhin konfiguriert sind zum:
Empfangen, von der Basisstation, einer Angabe der COT,
wobei die Listen-before-Talk (LBT)-Prozedur eine LBT-Prozedur der Kategorie 2 (Category 2 bzw. Cat2) basierend wenigstens teilweise auf den DCI und der Angabe der COT ist.

10. Vorrichtung nach Anspruch 6, wobei der eine oder die mehreren Prozessoren weiterhin konfiguriert sind zum:
Empfangen, von der Basisstation, einer Angabe der COT, und
Bestimmen einer Lücke zwischen einem Ende einer Downlink-Periode und einem Anfang einer Uplink-Periode,
wobei die Listen-before-Talk (LBT)-Prozedur eine LBT-Prozedur der Kategorie 1 (Category 1 bzw. Cat1) oder eine LBT-Prozedur der Kategorie 2 (Category 2 bzw. Cat2) basierend wenigstens teilweise auf der Lücke ist.

11. Vorrichtung nach Anspruch 6, wobei der eine oder die mehreren Prozessoren weiterhin konfiguriert sind zum:
Empfangen, von der Basisstation, einer Angabe der COT, und
Bestimmen, dass das UE nicht mit einer LBT-Cat2-Fähigkeit assoziiert ist,
wobei die LBT-Prozedur eine LBT-Cat3-Prozedur basierend wenigstens teilweise darauf, dass das UE nicht mit der LBT-Cat2-Fähigkeit assoziiert ist, ist.

12. Eine Vorrichtung für eine drahtlose Kommunikation an einer Basisstation, wobei die Vorrichtung aufweist:
einen Speicher, und
einen oder mehrere Prozessoren, die mit dem Speicher gekoppelt sind und konfiguriert sind zum:
Senden (810), an ein Benutzergerät (User Equipment bzw. UE), einer Angabe, die mit dem Durchführen eines Listen-before-Talk in Bezug auf eine Kanalbelegungszeit (Channel Occupancy Time bzw. COT) assoziiert ist, wobei die Angabe in einer Funkressourcensteuerung (Radio Resource Control bzw. RRC)-Nachricht enthalten ist und einen RRC-Parameter enthält, und wobei der RRC-Parameter angibt, ob das UE eine mit der COT assoziierten Listen-before-Talk-Prozedur hochstufen soll, und
Empfangen (820), von dem UE, einer Uplink-Kommunikation, wobei die Uplink-Kommunikation unter Verwendung der Listen-before-Talk-Prozedur basierend wenigstens teilweise auf der Angabe gesendet wurde.

13. Ein Verfahren für eine drahtlose Kommunikation, das durch ein Benutzergerät (User Equipment bzw. UE) durchgeführt wird, wobei das Verfahren aufweist:
Empfangen (710), von einer Basisstation, einer Angabe, die mit dem Durchführen eines Listen-before-Talk in Bezug auf eine Kanalbelegungszeit (Channel Occupancy Time bzw. COT) assoziiert ist, wobei die Angabe in einer Funkressourcensteuerung (Radio Resource Control bzw. RRC)-Nachricht enthalten ist und einen RRC-Parameter enthält, und wobei der RRC-Parameter angibt, ob das UE eine mit der COT assoziierten Listen-before-Talk-Prozedur hochstufen soll, und
Senden (720), an die Basisstation, einer Uplink-Kommunikation, wobei die Uplink-Kommunikation unter Verwendung der Listen-before-Talk-Prozedur basierend wenigstens teilweise auf der Angabe gesendet wird.

14. Ein Verfahren für eine drahtlose Kommunikation, das durch eine Basisstation durchgeführt wird, wobei das Verfahren aufweist:
Senden (810), an ein Benutzergerät (User Equipment bzw. UE), einer Angabe, die mit dem Durchführen eines Listen-before-Talk in Bezug auf eine Kanalbelegungszeit (Channel Occupancy Time bzw. COT) assoziiert ist, wobei die Angabe in einer Funkressourcensteuerung (Radio Resource Control bzw. RRC)-Nachricht enthalten ist und einen RRC-Parameter enthält, und wobei der RRC-Parameter angibt, ob das UE eine mit der COT assoziierten Listen-before-Talk-Prozedur hochstufen soll, und
Empfangen (820), von dem UE, einer Uplink-Kommunikation, wobei die Uplink-Kommunikation unter Verwendung der Listen-before-Talk-Prozedur basierend wenigstens teilweise auf der Angabe gesendet wurde.

## Revendications

1. Un appareil pour la communication sans fil au niveau d'un équipement utilisateur, UE, l'appareil comprenant :
une mémoire ; et
un ou plusieurs processeurs, couplés à la mémoire, configurés pour :
recevoir (710), d'une station de base, une indication associée à l'exécution de l'écoute de la porteuse avant transmission relative à un temps d'occupation de canal, COT, dans lequel l'indication est incluse dans un message de commande de ressource radio, RRC, et comprend un paramètre RRC, et dans lequel le paramètre RRC indique si l'UE doit mettre à niveau une procédure d'écoute de la porteuse avant transmission associée au COT ; et
transmettre (720), à la station de base, une communication de liaison montante, dans lequel la communication de liaison montante est transmise en utilisant la procédure d'écoute de la porteuse avant transmission basée au moins en partie sur l'indication.

2. L'appareil selon la revendication 1, dans lequel la communication de liaison montante est associée à une attribution configurée ou à une attribution dynamique.

3. L'appareil selon la revendication 1, dans lequel le ou les processeurs sont en outre configurés pour :
recevoir, de la station de base, une indication du COT,
la procédure d'écoute de la porteuse avant transmission étant basée au moins en partie sur l'indication du COT.

4. L'appareil selon la revendication 3, dans lequel :
la procédure d'écoute de la porteuse avant transmission, LBT, est une procédure LBT de catégorie 1, Cat1, basée au moins en partie sur l'indication du COT ; ou
la procédure d'écoute de la porteuse avant transmission, LBT, est une procédure LBT de catégorie 2, Cat2, basée au moins en partie sur l'indication du COT.

5. L'appareil selon la revendication 3, dans lequel le ou les processeurs sont en outre configurés pour :
déterminer un intervalle entre la fin d'une période de liaison descendante et le début d'une période de liaison montante,
dans lequel la procédure d'écoute de la porteuse avant transmission, LBT, est une procédure LBT de catégorie 1, Cat1, ou une procédure LBT de catégorie 2, Cat2, basée au moins en partie sur l'intervalle.

6. L'appareil selon la revendication 1, dans lequel le ou les processeurs sont en outre configurés pour :
recevoir, de la station de base, des informations de contrôle de liaison descendante, DCI, qui indiquent un type d'écoute de la porteuse avant transmission,
dans lequel la procédure d'écoute de la porteuse avant transmission est basée au moins en partie sur les DCI.

7. L'appareil selon la revendication 6, dans lequel :
la procédure d'écoute de la porteuse avant transmission, LBT, est une procédure LBT de catégorie 1, Cat1, basée au moins en partie sur les DCI ; ou
la procédure d'écoute de la porteuse avant transmission, LBT, est une procédure LBT de catégorie 3, Cat3, basée au moins en partie sur les DCI ; ou
la procédure d'écoute de la porteuse avant transmission, LBT, est une procédure LBT de catégorie 2, Cat2, basée au moins en partie sur les DCI.

8. L'appareil selon la revendication 6, dans lequel le ou les processeurs sont en outre configurés pour :
recevoir, de la station de base, une indication du COT,
dans lequel la procédure d'écoute de la porteuse avant transmission, LBT, est une procédure LBT de catégorie 1, Cat1, basée au moins en partie sur les DCI et l'indication du COT.

9. L'appareil de la revendication 6, dans lequel le ou les processeurs sont en outre configurés pour :
recevoir, de la station de base, une indication du COT,
dans lequel la procédure d'écoute de la porteuse avant transmission, LBT, est une procédure LBT de catégorie 2, Cat2, basée au moins en partie sur les DCI et l'indication du COT.

10. L'appareil selon la revendication 6, dans lequel le ou les processeurs sont en outre configurés pour :
recevoir, de la station de base, une indication du COT ; et
déterminer un intervalle entre la fin d'une période de liaison descendante et le début d'une période de liaison montante,
dans lequel la procédure d'écoute de la porteuse avant transmission, LBT, est une procédure LBT de catégorie 1, Cat1, ou une procédure LBT de catégorie 2, Cat2, basée au moins en partie sur l'intervalle.

11. L'appareil selon la revendication 6, dans lequel le ou les processeurs sont en outre configurés pour :
recevoir, de la station de base, une indication du COT ; et
déterminer que l'UE n'est pas associé à une capacité d'écoute de la porteuse avant transmission, LBT, de catégorie 2, Cat2,
dans lequel la procédure LBT est une procédure LBT de catégorie 3, Cat3, basée au moins en partie sur le fait que l'UE n'est pas associé à la capacité LBT Cat2.

12. Un appareil de communication sans fil au niveau d'une station de base, l'appareil comprenant :
une mémoire ; et
un ou plusieurs processeurs, couplés à la mémoire, configurés pour :
transmettre (810), à un équipement d'utilisateur, UE, une indication associée à l'exécution de l'écoute de la porteuse avant transmission relative à un temps d'occupation de canal, COT, dans lequel l'indication est incluse dans un message de commande de ressource radio, RRC, et comprend un paramètre RRC, et dans lequel le paramètre RRC indique si l'UE doit mettre à niveau une procédure d'écoute de la porteuse avant transmission associée au COT ; et
recevoir (820), de l'UE, une communication de liaison montante, dans lequel la communication de liaison montante a été transmise en utilisant la procédure d'écoute de la porteuse avant transmission basée au moins en partie sur l'indication.

13. Un procédé de communication sans fil effectué par un équipement d'utilisateur, UE, le procédé comprenant les étapes consistant à :
recevoir (710), depuis une station de base, une indication associée à l'exécution d'une écoute de la porteuse avant transmission relative à un temps d'occupation de canal, COT, dans lequel l'indication est incluse dans un message de commande de ressource radio, RRC, et comprend un paramètre RRC, et dans lequel le paramètre RRC indique si l'UE doit mettre à niveau une procédure d'écoute de la porteuse avant transmission associée au COT ; et
transmettre (720), à la station de base, une communication de liaison montante, dans lequel la communication de liaison montante est transmise en utilisant la procédure d'écoute de la porteuse avant transmission sur la base, au moins en partie, de l'indication.

14. Un procédé de communication sans fil effectué par une station de base, le procédé comprenant :
la transmission (810), à un équipement d'utilisateur, UE, d'une indication associée à l'exécution d'une écoute de la porteuse avant transmission relative à un temps d'occupation de canal, COT, dans lequel l'indication est incluse dans un message de commande de ressource radio, RRC, et comprend un paramètre RRC, et dans lequel le paramètre RRC indique si l'UE doit mettre à niveau une procédure d'écoute de la porteuse avant transmission associée au COT ; et
la réception (820), de l'UE, d'une communication de liaison montante, dans lequel la communication de liaison montante a été transmise en utilisant la procédure d'écoute de la porteuse avant transmission sur la base, au moins en partie, de l'indication.
